# EUROPEAN PATENT SPECIFICATION

(11) **EP 2 867 911 B1**
(45) Date of publication and mention of the grant of the patent: **29.03.2017**
(21) Application number: 13750353.8
(22) Date of filing: 02.07.2013
(51) Int. Cl.: H01H 37/04, H01H 71/08, H01H 37/00

(54) **PROTECTING ELECTRICAL DISTRIBUTION EQUIPMENT AGAINST OVERHEATING**
SCHUTZ EINER ELEKTRISCHEN VERTEILUNGSANLAGE VOR ÜBERHITZUNG
PROTECTION D'ÉQUIPEMENT DE DISTRIBUTION D'ÉLECTRICITÉ CONTRE LA SURCHAUFFE

(30) Priority: 02.07.2012 GB 201211709
(43) Date of publication of application: 06.05.2015
(73) Proprietor: ILEC Limited, Cheltenham, GL53 7LS (GB)
(72) Inventor: HEATHCOTE, David William, Gloucester GL1 5AJ (GB)
(74) Representative: Tebbutt, George Ashley
(86) International application number: PCT/GB2013/000289
(87) International publication number: WO 2014/006356

(56) References cited:
- EP-A1- 2 408 073
- WO-A1-96/37025
- FR-A1- 2 767 925
- US-A- 4 268 812
- US-A1- 2008 191 833
- DATABASE WPI Week 201027, Derwent Publications Ltd., London, GB; AN 2010-E06529 -& CN 101 055 212 A (ZHANG C) 17 October 2007

## Description

This invention relates to the general subject of overheating of electrical circuits, electrical connectors and electrical components.

It is well known that electrical fires are often caused at a point where there is poor electrical connectivity, which may be due to many factors, including incorrectly tightened screws, clamps or connection plugs, corrosion occurring at connection points and wires becoming loose due to mechanical fatigue over time or thermal trauma caused by successive expansion and contraction of metallic parts within an electrical distribution system. This is despite the presence of fuses which blow when there is excess current (but often overheat before doing so) and despite the presence of circuit breakers such as residual current detectors (RCD's) and residual current breakers with overload protection (RCBO's). Such electrical fires caused by overheated components are therefore a regular hazard even where all electrical connections have been properly made and all components meet the required technical specification.

The foregoing problems can be alleviated by the use of one-way thermal switches which exhibit a permanent closed circuit action when exposed to temperature exceeding a specified activation temperature, such as 80°C, thereby triggering an automatic power interruption to the main circuit being monitored. Such switches can be placed adjacent to known problem areas, such as next to the live terminal of a wall-mounted domestic plug socket, and in the event of overheating occurring the switch activates to thereby close the monitoring system and trigger an alarm which cuts off mains current and hence prevents further overheating at the source. However, it will be appreciated that where there are very many electrical connections around the circuit to be protected from thermal overheating a large number of thermal switches have to be used, and individual ones replaced upon the happening of an overheat event at the location where they are positioned. The installation of multiple thermal switches is therefore both time consuming and problematic where e.g. a large number of connections are present, each in close proximity to the other, such as in a domestic consumer unit, fuse box, distribution board etc. where multiple connections are made across a linear array of such connections, such as horizontally or vertically and where it is common to use busbars to which electrical connections are made by e.g. individual RCD's mounted in rows between oppositely disposed pairs of busbars.

FR 2767925 discloses a detector having a lower heat collector formed of a metal which melts at a set temperature. The collector extends along a row of electrical modules and is mounted in thermal contact with the connecting terminals. The collector is connected to an alarm circuit which detects the metal change above a set temperature.

EP 2 408 073 discloses a device having sections for distributing power from a power supply to an electrical line protection apparatus e.g. differential apparatus and circuit breaker, where each section is formed of a strip whose portion cooperates with tabs and a compartment of an enclosure. Each section functions in an autonomous manner, and receives a measuring cell that measures electrical parameters such as voltage, current or electromagnetic fields, and/or physical parameters such as temperature, relative to the section.

CN 101055 212 discloses a parallel dual-metal temperature switch linetype temperature-sensitive detector which is connected to a computer modulator and a terminal resistance R to form a closed single acquisition circuit by two ends of a temperature-sensitive cable, wherein the structure of the temperature-sensitive cable comprises two conductors, one of which is coated with a conductive layer, where a plurality of dual-metal temperature switches are connected parallel between the conductive layer and the bare conductor, then all are cladded in an insulation sleeve; the length of the temperature-sensitive cable can be designed to be 20m-500m, and the space between the dual-metal temperature switches can be 0.2m-1m. The dual metal temperature switch is provided with reversibility which can automatically be restored to its initial state as the surrounding temperature of the detection cable decreases. The warning temperature is independent of cable heated length, ambient temperature and use length.

According to a first aspect of the invention there is provided sensor apparatus for sensing overheating along a linear array of electrical connections, the apparatus including one or more linear carriages adapted to fit over the linear array of connections to be monitored, the or each carriage including a plurality of spaced-apart thermal switches sandwiched between a pair of metal busbars, the busbars being electrically connectable to a monitoring circuit which triggers an alarm when the circuit is closed by activation of one or more of the thermal switches.

With this arrangement multiple aligned connections can be monitored for overheating quickly and easily by, effectively, the use of a single component, being the elongate carriage containing multiple thermal switches at spaced intervals along its length.

The means by which the carriage can be fitted into place above a linear array of connections may conveniently take the form of clips comprising one or more projections, such as fins, extending below the carriage and being receivable between e.g. individual RCD's or micro-circuit breakers (MCB's) and the or each such clip may be moveably mounted or mountable to the base of the carriage to allow it to be fitted to a linear array of electrical connections of differing widths.

Conveniently, below each thermal sensor is an air vent which allows hot air resulting from an overheat event occurring immediately underneath the carriage below the thermal switch to trigger the switch and hence close the monitoring circuit to cause an alarm condition to be detected to thereby activate one or more circuit breakers forming part of the electrical system being monitored.

Preferably, the monitoring circuit for use with the apparatus is low voltage, such as 15 volts, with a maximum short term current of 300 mA such that the presence of the apparatus on e.g. a distribution board does not present an electric shock hazard, although it will be understood that higher or lower voltages may be used.

According to a second type of sensor apparatus, not according to the present invention, there is provided heat sensing apparatus for detecting an overheat event at a releasable connection point forming part of an electric circuit, such as at a neutral terminal point on a distribution board, the apparatus comprising a hollow metal sensor plug containing an axially-wired thermal switch, the wires from each end being insulated and being connectable via a two-core cable to a monitoring circuit for monitoring closure of the thermal switch during an overheat event, and a terminal pin extending from the outside of the plug, the terminal pin being releasably connectable to an individual connector point of the circuit being monitored, such as a neutral terminal of a distribution board.

This arrangement allows for thermal switches to be installed anywhere around e.g. a distribution board where there is a connection point or terminal, where each thermal switch can therefore be activated in the event of overheating by heat transmission through the metal housing via the terminal pin.

According to a preferred embodiment of the invention there is provided a combination sensor system in which sensor apparatus according to the first aspect of the invention and a sensor apparatus of the second type described above are used together as part of the same monitoring circuit by which linear arrays of electrical connections can be monitored as well as individual electrical connections.

The invention will now be described, by way of example only, with reference to the accompanying drawings in which:
Figure 1 is a front view of an electrical distribution board showing the apparatus of the invention *in situ,*
Figure 2 is a perspective view of a sensor carriage according to the first aspect of the invention,
Figure 3 is an enlarged and exposed partial view of the carriage of Figure 2,
Figure 4 is a view of a thermal switch and associated cable arranged according to the second type of sensor apparatus described above, and
Figure 5 shows a part sectional view of the thermal switch at Figure 4 mounted within a hollow sensor plug.

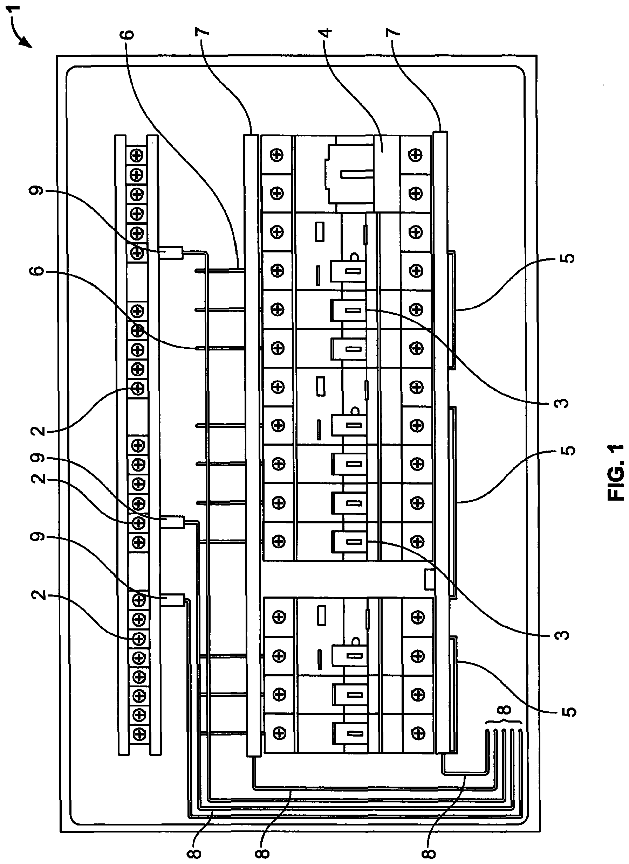

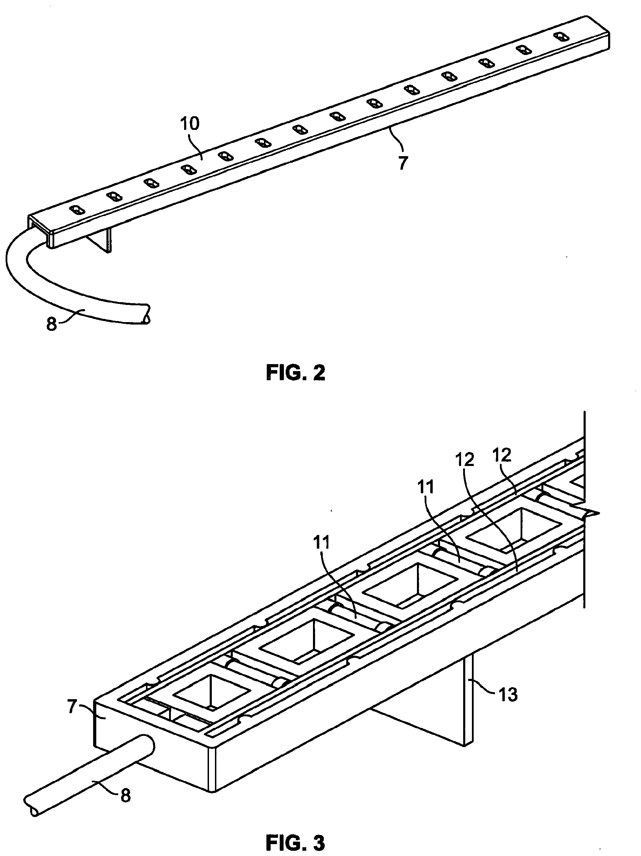

Figure 1 is a front view of an exposed electrical distribution board or consumer unit shown generally at 1 comprising a linear array of neutral connectors 2 mounted above a linear array of MCB's and RCB's 3 at the end of which array is a mains switch 4. Copper busbars 5 provide common connections to various groups of the MCB's and RCBs 3 and exit cables 6 are then distributed around the building (not shown) within which the distribution board 1 is situated, all in a known manner. As will be apparent, a large number of electrical connections are present, each capable of being a source of overheating and although thermal switches may be utilised in an array around the distribution board to detect such overheating events it will be apparent that their installation would be time consuming and tedious, with the possibility of individual switches being improperly connected. To address this problem, the invention in its first aspect comprises sensor apparatus which includes, in this case, a pair of elongate carriages 7 (shown more clearly in Figures 2 and 3) which are clipped to respective ends of the MCB's and RCB's 3 at their respective electrical connection points and from one end each of which extends an insulated two-core cable 8. With this arrangement it will be noted that multiple MCB's and RCB's 3 and the mains switch 4 can be monitored by the presence of the carriages 7 at their respective electrical connection points, without the need to provide individual thermal switches 4 for each group of MCB's or RCB's 3 or at the mains switch 4.

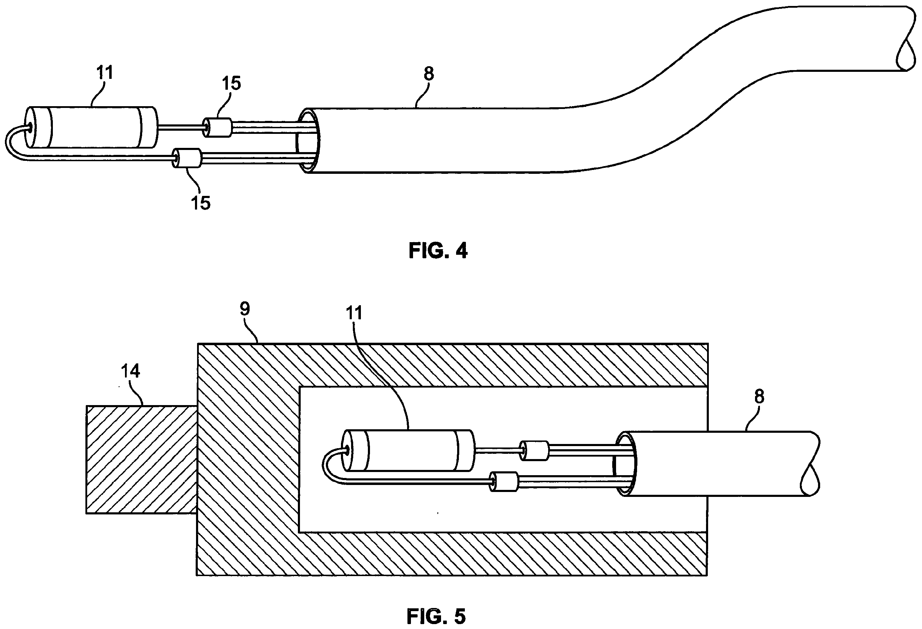

Where an elongate carriage 7 is not required i.e. where there are only one or a few electrical connections to be monitored an alternative approach in accordance with the second aspect of the invention may be used in which individual thermal switches are mounted within hollow metal sensor plugs 9 (seen more clearly with reference to Figure 5), which include terminal pins 14 by which they may be connected to, in the case illustrated, three of the various neutral terminals 2, with each such sensor plug 9 also including a two-core exit cable 8 by which it can be connected to the rest of a monitoring circuit (not shown) for sensing when one or more thermal views has closed and hence current is flowing through the or each respective two-core cable 8. Again, this is a particularly convenient and simple way by which thermal switches may be positioned at convenient points around the distribution board 1 instead of or as well as the use of elongate sensor carriages 7.

Turning now to Figure 2 it will be seen that the elongate carriage 7 includes a vented top cover 10 which is removable to expose the inside of the carriage 7 as shown in Figure 3, being an enlarged view of one end of the sensor carriage 7. In the drawing a number of thermal switches 11 are shown positioned at spaced intervals therealong, with each end of each switch 11 being in electrical contact with a respective one of a pair of busbars 12 electrically connected at the end shown to an insulated two-core cable 8. Beneath each thermal switch 11 is a vent allowing heated air from an overheat event to flow past and, if of sufficiently high temperature to thereby trip the switch 11 to close the circuit between the busbars 12.

Depending from the carriage 7 is a removable clip in the form of a fin 13 which can be slotted between adjacent pairs of MCB's or RCB's 3 so as to releasably secure the carriage 7 to a respective linear array thereof in the manner as shown in Figure 1.

Figures 4 and 5 respectively show how an axially wired thermal switch 11 can be mounted within a hollow metal sensor plug 9 (shown in section) whose terminal pin 14 can thereafter be inserted within and retained by an electrical connector in the manner as shown in Figure 1. The axial wires from the switch 11 are crimped to respective ends of the insulated twin-core cable 8 by the use of lugs 15 and the assembly then inserted within the hollow part of the sensor plug 9 in the manner as shown in Figure 5, thereafter to be sealed in place by a suitable bonding agent such as silicone sealant. The other end of the cable 8 can then be connected to a monitoring circuit (not shown) which remains open until activation of the thermal switch 11 by a heat event at the site where the terminal pin 14 is connected via conduction through the metal. As will be apparent, the plug 9 and twin-core cable 8 may be provided as a single unit in a "pigtail" arrangement which is particularly easy to connect and disconnect to both the electrical connector being monitored and the monitoring circuit. The invention therefore provides an elegantly simple solution to the problem of providing multiple thermal switches across or to multiple connection points including linear arrays of the type described.

## Claims

1. Sensor apparatus for sensing overheating along a linear array of electrical connections, the apparatus including one or more linear carriages (7) adapted to fit over the linear array of connections to be monitored, **characterised in that** the or each carriage includes:
a pair of metal busbars (12);
a plurality of spaced-apart thermal switches (11) sandwiched between the pair of metal busbars (12) and each configured to close when activated;
wherein the busbars (12) are electrically connectable to a monitoring circuit;
such that in use when connected to a monitoring circuit, closure of one or more of the thermal switches closes the monitoring circuit for triggering an alarm.

2. Sensor apparatus according to claim 1, wherein below each thermal switch (11) there is an air vent which allows hot air resulting from an overheat event occurring immediately underneath the carriage (7) below the thermal switch (11) to activate the switch (11).

3. Sensor apparatus according to claim 1 or 2, wherein the or each carriage (7) is elongate.

4. Sensor apparatus according to any preceding claim, wherein the or each linear carriage (7) is adapted to fit over a linear array of electrical connections of a distribution board.

5. Sensor apparatus according to any preceding claim wherein the or each linear carriage (7) is adapted to fit over a linear array of electrical connections of a domestic consumer unit.

6. Sensor apparatus according to any preceding claim, wherein the or each linear carriage (7) is provided with one or more clips (13) comprising one or more projections extending below the respective carriage (7).

7. Sensor apparatus according to claim 6, wherein the one or more projections are fins (13).

8. Sensor apparatus according to claim 7, wherein the fins are receivable between adjacent residual current detectors or micro-circuit breakers.

9. Sensor apparatus according to any of claims 6-8, wherein the or each clip (13) is moveably mounted on the base of the respective carriage (7) for adapting to linear arrays of connections of different widths.

10. Sensor apparatus according to any preceding claim, wherein the or each linear carriage (7) comprises a top cover (10) which is removable to expose the thermal switches (11).

11. A sensor installation comprising:
a monitoring circuit;
sensor apparatus in accordance with any of claims 1-10, wherein the busbars (12) are electrically connected to the monitoring circuit; and
wherein the monitoring circuit is low voltage, such as 15 volts, with a maximum short term current of 300mA.

12. A sensor installation comprising:
an electrical system comprising a linear array of connections and one or more circuit breakers;
sensor apparatus in accordance with any of claims 1-10, wherein a linear carriage (7) of the sensor apparatus is installed over the linear array of connections;
a monitoring circuit electrically connected to the busbars (12) of the linear carriage and configured to trigger an alarm condition when the monitoring circuit is closed;
wherein the sensor installation is configured to detect the alarm condition and thereby activate one or more circuit breakers of the electrical system.

13. A sensor installation comprising:
an electrical system comprising a distribution board (1) having a linear array of connections;
sensor apparatus in accordance with any of claims 1-10, wherein a linear carriage (7) of the sensor apparatus is installed over the linear array of connections.

14. A sensor installation according to claim 11 further comprising an electrical system comprising a distribution board (1) having a linear array of connections wherein a linear carriage of the sensor apparatus is installed over the linear array of connectors, or a sensor installation according to claim 12 wherein the electrical system comprises a distribution board.

15. A combination sensor system comprising:
a monitoring circuit;
sensor apparatus in accordance with any one of claims 1-10, wherein the busbars (12) are electrically connected to the monitoring circuit; and
heat sensing apparatus for detecting an overheat event at a releasable connection point forming part of an electrical system, such as at a neutral terminal point on a distribution board, the heat sensing apparatus comprising:
a hollow metal sensor plug (9) containing an axially-wired thermal switch (11), the wires from each end being insulated and being connected via a two-core cable (8) to the monitoring circuit for monitoring closure of the thermal switch during an overheat event, and
a terminal pin (14) extending from the outside of the plug, the terminal pin being releasably connectable to an individual connector point of the electrical system being monitored, such as a neutral terminal of a distribution board (1);
whereby linear arrays of electrical connections and individual electrical connections can be monitored.

## Patentansprüche

1. Sensorvorrichtung zum Abtasten einer Überhitzung entlang einer linearen Anordnung elektrischer Verbindungen, wobei die Vorrichtung eine oder mehrere lineare Schlitten (7) enthält, die angepasst sind, um über die lineare Anordnung von Verbindungen zu passen, die überwacht werden sollen, **dadurch gekennzeichnet, dass** jeder Schlitten folgendes enthält:
ein Paar Metallstromschienen (12);
eine Vielzahl von beabstandeten Wärmeschaltern (11), die zwischen dem Paar Metallstromschienen (12) eingelegt und konfiguriert sind, um bei Aktivierung zu schließen;
wobei die Stromschienen (12) elektrisch mit einem Überwachungskreis verbunden werden können;
sodass in der Verwendung, wenn verbunden mit einem Überwachungskreis, ein Schließen von einem oder mehreren der Wärmeschalter den Überwachungskreis zu Auslösen eines Alarms schließt.

2. Sensorvorrichtung gemäß Anspruch 1, wobei es unter jedem Wärmeschalter (11) eine Belüftung gibt, die ermöglicht, dass eine resultierende Heißluft von einem Überhitzungsereignis, das direkt unterhalb des Schlittens (7) unter dem Wärmeschalter (11) auftritt, den Schalter (11) zu aktivieren.

3. Sensorvorrichtung gemäß Anspruch 1 oder 2, wobei der oder jeder Schlitten (7) gestreckt ist.

4. Sensorvorrichtung gemäß einem beliebigen vorherigen Anspruch, wobei der oder jeder lineare Schlitten (7) angepasst ist, um über eine lineare Anordnung elektrischer Verbindungen einer Verteilerschaltung zu passen.

5. Sensorvorrichtung gemäß einem beliebigen vorherigen Anspruch, wobei der oder jeder lineare Schlitten (7) angepasst ist, um über eine lineare Anordnung elektrischer Verbindungen einer Haushaltverbrauchereinheit zu passen.

6. Sensorvorrichtung gemäß einem beliebigen vorherigen Anspruch, wobei der oder jeder lineare Schlitten (7) mit einer oder mehreren Klammern (13) bereitgestellt ist, umfassend einen oder mehrere Überstände, die sich unter dem jeweiligen Schlitten (7) erstrecken.

7. Sensorvorrichtung gemäß Anspruch 6, wobei der eine oder die mehreren Überstände Rippen (13) sind.

8. Sensorvorrichtung gemäß Anspruch 7, wobei die Rippen zwischen anliegenden Fehlerstromdetektoren oder Mikrotrennschaltern aufgenommen sein können.

9. Sensorvorrichtung gemäß einem beliebigen der Ansprüche 6-8, wobei die oder jeder Klammer (13) beweglich auf der Basis des jeweiligen Schlittens (7) montiert ist, um sich an lineare Anordnungen von Verbindungen verschiedener Breite anzupassen.

10. Sensorvorrichtung gemäß einem beliebigen vorherigen Anspruch, wobei der oder jeder lineare Schlitten (7) eine obere Abdeckung (10) umfasst, die abnehmbar ist, um die Wärmeschalter (11) freizulegen.

11. Sensoranlage, umfassend:
einen Überwachungskreis;
eine Sensorvorrichtung gemäß einem beliebigen der Ansprüche 1-10, wobei die Stromschienen (12) elektrisch mit dem Überwachungskreis verbunden sind;
und
wobei der Überwachungskreis Niederspannung ist, wie z. B. 15 Volt mit einem maximalen Kurzzeitstrom von 300 mA.

12. Sensoranlage, umfassend:
ein elektrisches System umfassend eine lineare Anordnung von Verbindungen und einen oder mehrere Trennschalter;
Sensorvorrichtung gemäß einem beliebigen der Ansprüche 1-10, wobei ein linearer Schlitten (7) der Sensorvorrichtung über der linearen Anordnung von Verbindungen installiert ist;
einen Überwachungskreis, der elektrisch mit den Stromschienen (12) des linearen Schlittens verbunden und konfiguriert ist, einen Alarmzustand auszulösen, wenn der Überwachungskreis geschlossen wird;
wobei die Sensoranlage konfiguriert ist, um den Alarmzustand zu erfassen und dadurch einen oder mehrere Trennschalter des elektrischen Systems zu aktivieren.

13. Sensoranlage, umfassend:
ein elektrisches System umfassend eine Verteilerschaltung (1) mit einer linearen Anordnung von Verbindungen;
Sensorvorrichtung gemäß einem beliebigen der Ansprüche 1-10, wobei ein linearer Schlitten (7) der Sensorvorrichtung über der linearen Anordnung von Verbindungen installiert ist.

14. Sensoranlage gemäß Anspruch 11, ferner umfassend ein elektrisches System umfassend eine Verteilerschaltung (1) mit einer linearen Anordnung von Verbindungen, wobei ein linearer Schlitten der Sensorvorrichtung über der linearen Anordnung von Anschlüssen installiert ist, oder eine Sensoranlage gemäß Anspruch 12, wobei das elektrische System eine Verteilerschaltung umfasst.

15. Ein kombiniertes Sensorsystem, umfassend:
einen Überwachungskreis;
eine Sensorvorrichtung gemäß einem beliebigen der Ansprüche 1-10, wobei die Stromschienen (12) elektrisch mit dem Überwachungskreis verbunden sind;
und
eine Hitzeabtastvorrichtung zum Erfassen eines Überhitzungsereignisses an einem lösbaren Verbindungspunkt, der Teil eines elektrischen Systems ist, wie z. B. an einem Nullleiterendpunkt an einer Verteilerschaltung, die Hitzeabtastvorrichtung umfassend:
einen hohlen Metallsensorstecker (9), der einen axial verdrahteten Wärmeschalter (11) enthält, wobei die Leiter von jedem Ende isoliert sind und über ein zweiadriges Kabel (8) mit dem Überwachungskreis verbunden sind, um ein Schließen des Wärmeschalters während eines Überhitzungsereignisses zu überwachen, und
einen Anschlusskontakt (14), der sich von der Außenseite des Steckers erstreckt, wobei der Anschlusskontakt lösbar mit einem individuellen Anschlusspunkt des elektrischen Systems verbunden werden kann, das überwacht wird, wie z. B. ein Nullleiterkontakt einer Verteilerschaltung (1);
wobei lineare Anordnungen von elektrischen Verbindungen und individuelle elektrische Verbindungen überwacht werden können.

## Revendications

1. Le dispositif capteur pour détecter une surchauffe le long d'un réseau linéaire de connexions électriques, l'appareil comprend un ou plusieurs chariots linéaires (7) adaptés pour s'ajuster sur le réseau linéaire de connexions à surveiller, dans lequel le ou chaque chariot comprend :
une paire de barres métalliques (12) ;
une pluralité de commutateurs thermiques espacés (11) serrés entre la paire de barres omnibus métalliques (12) et chacun étant configuré pour se fermer une fois activé ;
dans lequel les barres omnibus (12) peuvent être connectées électriquement à un circuit de surveillance ;
telle que durant l'utilisation lorsqu'elle est connectée à un circuit de surveillance, la fermeture d'un ou plusieurs des interrupteurs thermiques ferme le circuit de surveillance pour déclencher une alarme.

2. Le dispositif capteur selon la revendication 1, dans lequel, au-dessous de chaque commutateur thermique (11), il y a un évent d'aération qui permet à l'air chaud résultant d'un évent de surchauffe se produisant immédiatement au-dessous du chariot (7) sous le commutateur thermique (11).

3. Le dispositif capteur selon la revendication 1 ou 2, dans lequel le ou chaque chariot (7) est allongé.

4. Le dispositif capteur selon l'une quelconque des revendications précédentes, dans lequel le ou chaque chariot linéaire (7) est adapté pour s'ajuster à un réseau linéaire de connexions électriques d'une carte de distribution.

5. Le dispositif capteur selon l'une quelconque des revendications précédentes dans lequel le ou chaque chariot linéaire (7) est adapté pour s'ajuster à un réseau linéaire de connexions électriques d'une unité de consommation domestique.

6. Le dispositif capteur selon l'une quelconque des revendications précédentes, dans lequel le ou chaque chariot linéaire (7) est fourni d'un ou plusieurs clips (13) comprenant une ou plusieurs saillies s'étendant au-dessous du chariot respectif (7).

7. Le dispositif capteur selon la revendication 6, dans lequel la ou les saillies sont des ailettes (13).

8. Le dispositif capteur selon la revendication 7, dans lequel les ailettes sont susceptibles d'être reçues entre des détecteurs de courant résiduels adjacents ou des micro-disjoncteurs.

9. Le dispositif capteur selon l'une quelconque des revendications 6 à 8, dans lequel le ou chaque clip (13) est fixé de manière mobile sur la base du chariot respectif (7) pour s'ajuster à des réseaux linéaires de connexions de différentes largeurs.

10. Le dispositif capteur selon l'une quelconque des revendications précédentes, dans lequel le ou chaque chariot linéaire (7) comprend un couvercle supérieur (10) qui est détachable pour exposer les commutateurs thermiques (11).

11. L'installation de capteur comprend :
un circuit de surveillance ;
un dispositif capteur selon l'une quelconque des revendications 1 à 10, dans lequel les barres omnibus (12) sont connectées électriquement au circuit de surveillance ; et
dans lequel le circuit de surveillance est une tension basse, telle que 15 volts, avec un courant à court terme maximal de 300 mA.

12. L'installation de capteur comprend :
un système électrique comprenant un réseau linéaire de connexions et un ou
plusieurs disjoncteurs ;
un dispositif capteur selon l'une quelconque des revendications 1 à 10, dans lequel un chariot linéaire (7) du dispositif capteur est installé sur le réseau linéaire de connexions ;
un circuit de surveillance relié électriquement aux barres omnibus (12) du chariot linéaire et configuré pour déclencher une condition d'alarme lorsque le circuit de surveillance est fermé ;
dans lequel l'installation de capteur est configurée pour détecter la condition d'alarme et activer ainsi un ou plusieurs disjoncteurs du système électrique.

13. L'installation de capteur comprend :
un système électrique comprenant une carte de distribution (1) ayant un réseau linéaire de connexions ;
un dispositif capteur selon l'une quelconque des revendications 1 à 10, dans lequel un chariot linéaire (7) du dispositif capteur est installé sur le réseau linéaire de connexions.

14. L'installation de capteur selon la revendication 11, comprend en outre un système électrique comprenant une carte de distribution (1) comportant un réseau linéaire de connexions, dans lequel un chariot linéaire du dispositif capteur est installé sur le réseau linéaire de connecteurs ou une installation de capteur selon la revendication 12, dans lequel le système électrique comprend une carte de distribution.

15. Le système de détection de combinaison comprend :
un circuit de surveillance ;
un dispositif capteur selon l'une quelconque des revendications 1 à 10, dans lequel les barres omnibus (12) sont connectées électriquement au circuit de surveillance ; et
des dispositifs capteur de chaleur pour détecter un événement de surchauffe à un point de connexion libérable faisant partie d'un système électrique, tel qu'au niveau d'un point terminal neutre sur une carte de distribution, le dispositif capteur de chaleur comprend :
un connecteur de capteur métallique creux (9) contenant un interrupteur thermique (11) axialement câblé, les câbles de chaque extrémité étant isolés et étant reliés par l'intermédiaire d'un câble à deux conducteurs (8) au circuit de surveillance pour surveiller la fermeture du commutateur thermique pendant un événement de surchauffe, et
une broche de borne (14) s'étendant depuis l'extérieur de la fiche, la broche de borne pouvant être reliée de manière détachable à un point de connexion individuel du système électrique surveillé, tel qu'une borne neutre d'une carte de distribution (1) ;
Selon lequel des réseaux linéaires de connexions électriques et de connexions électriques individuelles peuvent être surveillés.
